# EUROPÄISCHE PATENTANMELDUNG

(11) **EP 1 059 038 A1**
(43) Veröffentlichungstag der Anmeldung: **13.12.2000**
(21) Anmeldenummer: 00890173.8
(22) Anmeldetag: 30.05.2000
(51) Int. Cl.: A22B 7/00

(54) **Vorrichtung zum Aufhängen von Tierkörpern beim Zerwirken**

(30) Priorität: 09.06.1999 AT 39899 U
(71) Anmelder: Rehling, Rüdiger, 7431 Bad Tatzmannsdorf (AT)
(72) Erfinder: Rehling, Rüdiger, 7431 Bad Tatzmannsdorf (AT)
(74) Vertreter: Rippel, Andreas, Dipl.-Ing.

(57) **Zusammenfassung**

Eine Vorrichtung zum Aufhängen von Tierkörpern beim Zerwirken besitzt eine am Boden abgestützte fahrbare Plattform (8), die mit einem Gestell (1,2) verbunden ist, das mit Haken (13) zum Aufhängen des Tierkörpers versehen ist.

Das Gestell weist zwei teleskopartig ineinander schiebbare und gegeneinander der Höhe nach verriegelbare Teile (1, 2) auf.

Überdies ist die Plattform (8) an das Gestell (1,2) anklappbar bzw. in das Gestell (1,2) einklappbar.

Dadurch wird erreicht, daß die Vorrichtung verschieden langen Tierkörpern angepaßt werden kann und daß sie bei Nichtgebrauch wenig Platz erfordert.

## Beschreibung

Die Erfindung bezieht sich auf eine Vorrichtung zum Aufhängen von Tierkörpern beim Zerwirken, mit einer am Boden abgestützten fahrbaren Plattform, die mit einem Gestell verbunden ist, das mit Haken zum Aufhängen des Tierkörpers versehen ist.

Um das Zerwirken von Tierkörpern, seien es Wild- oder Haustiere, zu erleichtern, wurden Vorrichtungen der oben genannten Art vorgeschlagen. Bei einer solchen bekannten Vorrichtung kann das Gestell sowohl in einer lotrechten als auch in einer waagrechten Stellung verwendet werden, um den Tierkörper sowohl in der hängenden als auch in der liegenden Lage zerwirken zu können. Die bekannten Vorrichtungen sind zwar grundsätzlich fahrbar, jedoch äußerst voluminös, sodaß bei Nichtgebrauch ein Abstellen viel Platz erfordert.

Die Erfindung hat es sich zum Ziel gesetzt, eine Vorrichtung zum Aufhängen von Tierkörpern beim Zerwirken zu schaffen, die leicht verschieden langen Tierkörpern angepaßt werden kann und die bei Nichtgebrauch wenig Platz erfordert. Erreicht wird dies in erster Linie dadurch, daß das Gestell zwei teleskopartig ineinander schiebbare und gegeneinander der Höhe nach verriegelbare Teile aufweist. Durch die Verwendung eines teleskopartig aus- und einschiebbaren Gestelles kann beim Zerwirken die Höhe des Gestelles der Länge des Tierkörpers angepaßt werden und es ist auch möglich, durch Zusammenschieben des Gestelles beim Abstellen der Vorrichtung der Höhe nach wenig Platz zu beanspruchen.

Nach einem weiteren Merkmal der Erfindung ist die Plattform an das Gestell anklappbar bzw. in das Gestell einklappbar. Dadurch wird beim Abstellen der Vorrichtung auch der Tiefe nach weniger Platz benötigt.

Eine allseitige Beweglichkeit der Vorrichtung wird dadurch erreicht, daß die Räder der fahrbaren Plattform schwenk- und fixierbar ausgebildet sind.

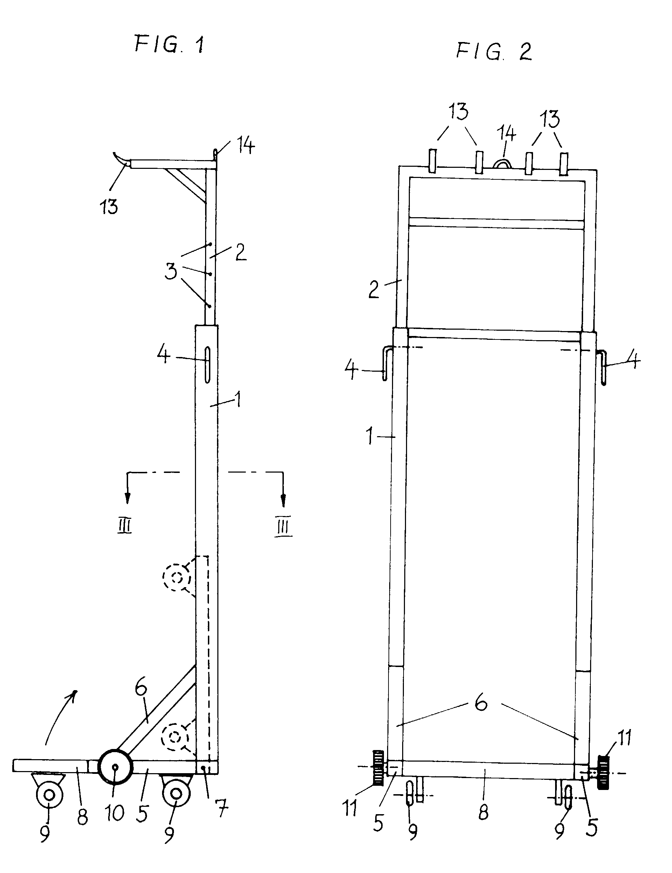

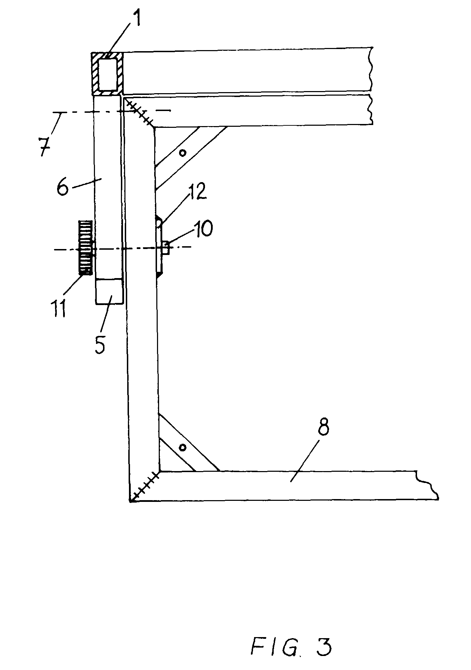

Nachstehend ist die Erfindung anhand eines in den Zeichnungen dargestellten Ausführungsbeispieles näher beschrieben, ohne auf dieses Beispiel beschränkt zu sein. Dabei zeigen: Fig. 1 eine Seitenansicht einer erfindungsgemäßen Vorrichtung, wobei die Plattform mit strichlierten Linien in der eingeklappten Stellung dargestellt ist, Fig. 2 die Vorderansicht der Vorrichtung nach Fig. 1; Fig. 3 einen Schnitt nach der Linie III-III in Fig. 1.

Gemäß den Zeichnungen weist ein Gestell zwei teleskopartig ineinander schiebbare rahmenartige Teilel und 2 auf. Der Teil 2 ist mit seitlichen Bohrungen 3 versehen, in die am Teil 1 verschiebbar angeordnete Riegel 4 einschiebbar sind. Dadurch kann der Teil 2 in verschiedenen Höhen gegenüber dem Teil 1 festgestellt werden.

Vom Teil 1 ragen zwei Arme 5 aus, die durch Streben 6 abgestützt sind. Zwischen den Holmen des Teiles 1 ist mittels Achsen 7 eine Plattform 8 derart schwenkbar gelagert, daß sie aus einer waagrechten Stellung in eine zwischen den Holmen des Teiles 1 befindliche lotrechte Stellung schwenkbar ist. In der waagrechten Stellung ist die Plattform 7 mittels Rädern 9 am Boden abgestützt und somit fahrbar. Zweckmäßig sind die Räder schwenk- und fixierbar, sodaß die Plattform 8 samt dem Gestell 1, 2 leicht manövrierbar ist.

Eine Fixierung der Plattform in der waagrechten Lage erfolgt mit einer Schraube 10, die vorteilhaft mit einer Rändelung 11 versehen ist. Diese Schraube 10 wird durch eine Bohrung des jeweiligen Armes 5 gesteckt und in ein Gewinde eingeschraubt, das in einer mit der Plattform 8 verschweißten Platte 12 angeordnet ist.

Zum Aufhängen des Tierkörpers sind am Teil 2 Haken 13 angeordnet. Außerdem ist eine Öse 14 vorgesehen, an der eine Winde angreifen kann.

Wie sich aus Fig. 1 ergibt, in der die Plattform 8 strichliert in der eingeschwenkten Stellung dargestellt ist, wird durch das Einschwenken der Plattform 8 die Tiefe der Vorrichtung wesentlich verringert. Wird außerdem der Teil 2 ganz in den Teil 1 eingeschoben, wird auch eine Verringerung der Höhe der Vorrichtung erreicht.

## Patentansprüche

1. Vorrichtung zum Aufhängen von Tierkörpern beim Zerwirken, mit einer am Boden abgestützten fahrbaren Plattform (8), die mit einem Gestell (1,2) verbunden ist, das mit Haken (13) zum Aufhängen des Tierkörpers versehen ist, **dadurch gekennzeichnet,** daß das Gestell zwei teleskopartig ineinander schiebbare und gegeneinander der Höhe nach verriegelbare Teile (1,2) aufweist, wobei die Plattform (8) an das Gestell (1,2) anklappbar bzw. in das Gestell (1,2) einklappbar ist.

2. Vorrichtung nach Anspruch 1, dadurch gekennzeichnet, daß die Räder (9) der fahrbaren Plattform (8) schwenk- und fixierbar ausgebildet sind.
